**Europäisches Patentamt**

**European Patent Office**

**Office européen des brevets**

(19)

(11) Veröffentlichungsnummer: **0 211 974**
**B1**

(12) **EUROPÄISCHE PATENTSCHRIFT**

(45) Veröffentlichungstag der Patentschrift:
**23.11.88**

(51) Int. Cl.⁴: **F 16 C 32/06**

(21) Anmeldenummer: **85110108.9**

(22) Anmeldetag: **12.08.85**

(54) **Lagerkörper für ein Luftkissenlager eines Linearlagers.**

(43) Veröffentlichungstag der Anmeldung:
**04.03.87 Patentblatt 87/10**

(45) Bekanntmachung des Hinweises auf die Patenterteilung:
**23.11.88 Patentblatt 88/47**

(84) Benannte Vertragsstaaten:
**AT BE CH DE FR GB IT LI LU NL SE**

(56) Entgegenhaltungen:
EP-A-0 065 337
EP-A-0 071 469
EP-A-0 121 829
BE-A-851 517
DE-A-1 425 164
DE-A-2 039 720
DE-A-2 558 068
DE-A-2 634 821
DE-A-3 023 837
DE-A-3 203 126
FR-A-2 287 616
GB-A-983 310
GB-A-1 103 016
US-A-3 395 948
US-A-3 604 767
US-A-3 722 996

(73) Patentinhaber: **KLG Kaufbeurer**
**Leiterplattengesellschaft mbH, Postfach 1432,**
**D-8950 Kaufbeuren (DE)**

(72) Erfinder: **Seitz, Helmut, König- Rudolf- Strasse 62,**
**D-8950 Kaufbeuren (DE)**

(74) Vertreter: **Ruschke, Hans Edvard, Patentanwälte**
**Dipl.- Ing. Olaf Ruschke Dipl.- Ing. Hans E.**
**Ruschke Dipl.- Ing. Jürgen Rost Dipl.- Chem. Dr.**
**U. Rotter Pienzenauerstrasse 2, D-8000 München**
**80 (DE)**

EP 0 211 974 B1

## Beschreibung

Die vorliegende Erfindung betrifft einen Lagerkörper für ein Luftkissenlager eines Linearlagers, etwa der Schlittenführung einer Präzisions-Werkzeugmaschine nach dem Oberbegriff des Anspruches 1.

Ein derartiger Lagerkörper ist grundsätzlich aus der Fig. 4 der GB-A-983 310 bekannt geworden - allerdings dort für den Kolbenfuß einer (eines) mit Hydrauliköl betriebenen Taumelscheiben-Axialkolbenpumpe(-motors). Dieser Lagerkörper weist in der kreisrunden Lagerfläche eine für das Hydrauliköl vorgesehene zentrale Austrittsöffnung auf, von der radiale Verteilungskanäle ausgehen, die in kurzen vertieften, senkrecht zu den Verteilungskanälen verlaufenden, geraden Nuten enden, die in der Nähe des Umfanges der Lagerfläche angeordnet sind.

Die BE-A-851 517 zeigt ebenfalls einen Kolbenfuß, der bei einer mit Hydrauliköl betriebenen Taumelscheiben-Axialkolbenpumpe Anwendung finden kann. Die Lagerfläche dieses Lagerkörpers weist in der Nähe ihres Zentrums mehrere Austrittsöffnungen für das Hydrauliköl auf, wobei jede Austrittsöffnung direkt in einer Aussparung oder Drucktasche von im wesentlichen kreissegmentförmigen Umriß mündet. Die Drucktaschen nehmen zusammen einen wesentlichen Teil der Lagerfläche ein.

Die EP-A-0 121 829 zeigt dagegen einen Lagerkörper für Luftlagerungen und hat eine zentral in einer ebenen Lagerfläche mündende Luftzuführöffnung, von der im Querschnitt flache Luftführungskanäle spiralförmig in der Lagerfläche nach außen laufen. Zusätzlich umgibt diese spiralförmigen Luftführungskanäle eine kreisförmige Nut, die mit einer Saugleitung verbunden ist.

Andere derartige Lagerkörper sind in zahlreichen Ausführungsformen im Stand der Technik bekannt und zwar entweder als aero- oder als hydrostatische Lagerkörper. Hierzu gehören beispielsweise die EP-A-0 071 469, die EP-B-0 065 337, die US-PS-3 722 996, die DE-OS-3 203 126, 2 544 872, 3 023 837 sowie die DE-PS-2 039 720, 2 558 068 und 2 634 821. Dabei geschieht häufig die Lastaufbringung auf den Lagerkörper durch ein an seiner Oberseite zentral angreifendes Kugelgelenk, wobei an der Unterseite des vielfach mit verschiedenen Formen von Drucktaschen versehenen Lagerkörpers eine oder mehrere Austrittsöffnungen für das verwendete Fluid vorgesehen sind, so daß ein Druckkissen zwischen der Lagerfläche und der stationären Gegenfläche, etwa einer Schlittenführung einer Werkzeugmaschine ausgebildet wird. Ein nur bei Luftkissenlagern auftretendes Problem besteht darin, daß sie leicht in eine instabile Lage geraten können derart, daß sie in Schwingungen geraten und dann "brummen". Dies kann durch ein Kippen in eine Richtung ausgelöst werden, ohne daß das Lager anschließend von sich aus in eine stabile Gleichgewichtslage zurückkehrt.

Eine derartige Erscheinung ist insbesondere bei solchen Luftlagern beobachtet worden, die in ihrer Lagerfläche eine ringförmige Drucktasche oder zumindest einige wenige große Drucktaschen dergestalt aufweisen, daß das darin befindliche Luftkissen bei einem geringfügigen Kippen naturgemäß sehr leicht den Weg des geringsten Widerstandes suchen kann. Dieser Effekt hat im übrigen auch eine nicht wünschenswerte Verringerung der Tragkraft des Lagers beim Kippen zur Folge.

Es ist daher die der vorliegenden Erfindung zugrundeliegende Aufgabe, den gattungsgemäß vorausgesetzten Lagerkörper für ein mit einem Fluid zu betreibenden Linearlager derart weiterzubilden, daß bei einem möglichst geringen Fertigungsaufwand ein solches Lager auch als Luftlager bei einem ungewollten Ankippen desselben keinen merkbaren Tragkraftverlust erleidet und es mit Sicherheit eine stabile Gleichgewichtslage aufweist, ohne daß die Gefahr eines "Brummens" gegeben wäre.

Diese Aufgabe wird erfindungsgemäß durch einen Lagerkörper gemäß Anspruch 1 gelöst. Es hat sich gezeigt, daß ein derart aufgebauter Lagerkörper für ein Luftlager aufgrund der guten Luftverteilung eine hohe Tragkraft besitzt und darüber hinaus auf ein Ankippen kaum mit einem Tragkraftverlust reagiert und im übrigen auch nicht zum "Brummen" neigt. Offenbar führen die vielen in der Nähe des Umfanges des Lagerkörpers verteilt angeordneten vertieften Drucktaschen dazu, daß trotz eines eventuellen anfänglichen Kippens des Lagerkörpers in eine Richtung eine im wesentlichen gleichbleibende Druck- und damit Kraftverteilung erhalten bleibt. Dies ist in erster Linie darauf zurückzuführen, daß die als einzelne Druckkissen in den verschiedenen Drucktaschen zu bezeichnenden Luftpolster so wenig wie möglich miteinander Verbindung haben mit der Folge, daß bei einem Ankippen des Lagers die Luft sich nicht so leicht den Weg des geringsten Widerstandes suchen kann.

Aufgrund des Speicherkapazität der im Inneren des Lagerkörpers ausgebildeten Luftsammelkammer, die in Verbindung mit den gedrosselten Luftaustrittsöffnungen oder -düsen steht, welche die Druckluft über die zugeordneten Luftverteilungskanäle in die Drucktaschen einströmen, wird weiter dazu beigetragen, daß auch beim kurzzeitigen Ankippen des Lagers die Druckverteilung bzw. das Luftkissen nicht vollkommen aus dem Gleichgewicht gerät. Durch die Speicherkapazität der Luftsammelkammer im Lagerkörper erfolgt ein weitgehend konstanter Luftaustritt an allen Düsenöffnungen, und zwar im wesentlichen unabhängig von der relativen Lage des Lagers zur Gegenfläche.

Grundsätzlich wäre es denkbar, jede der zahlreichen Drucktaschen mit einer eigenen Luftzuströmöffnung etwa im Zentrum zu versehen und auf diese Weise viele, voneinander "separate" Druckkissen zu erzeugen, doch hätte dies den Nachteil, daß die Öffnungen dann sehr klein sein müßten, was in der Praxis zu Verstopfungsproblemen führt, und daß der Fertigungsaufwand damit sehr stark steigt. Daher wird es als vorteilhaft angesehen, mehrere benachbarte Drucktaschen mittels zugehöriger Luftverteilungskanäle mit einer gemeinsamen Luftaustrittsöffnung zu verbinden.

Ein Ausführungsbeispiel der vorliegenden Erfindung wird nachfolgend unter Bezugnahme auf die beigefügten Zeichnungen beschrieben. Darin zeigt:

Fig. 1 eine Draufsicht auf die Lagerfläche des Lagerkörpers;

Fig. 2 einen Schnitt durch den Lagerkörper gemäß Fig. 1 längs Linie II-II;

Fig. 3 eine Teilschnittansicht im Bereich X der Figur 1, d.h. die Ausgestaltung einer Drucktasche im Randbereich der Lagerfläche;

Fig. 4 eine Teilschnittansicht im Bereich Y der Figur 1, d.h. im Bereich der Luftaustrittsöffnungen;

Fig. 5 eine Teilschnittansicht im Bereich Z der Figur 1, d.h. einen Schnitt durch einen Luftverteilungskanal.

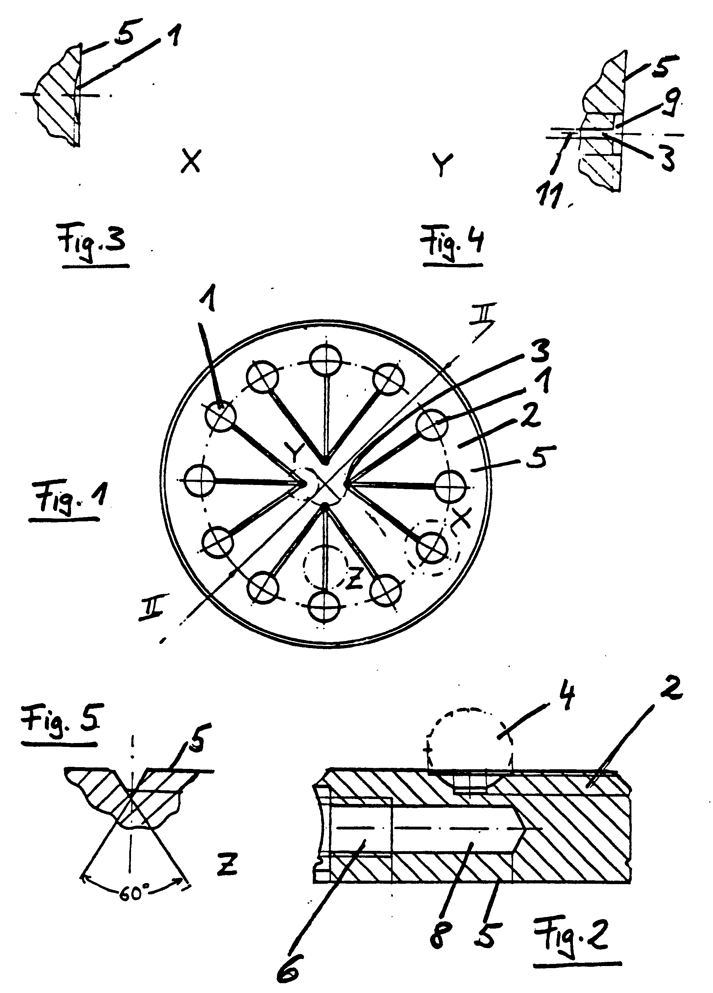

Der Lagerkörper 2 besteht im dargestellten Ausführungsbeispiel aus einem scheibenförmigen Körper mit kreisrundem Umfang, wobei im Zentrum der Deckfläche dieses Lagerkörpers (Fig. 2) ein Kugelgelenkkörper 4 vorgesehen ist, über den die Lasten eingeleitet werden, die das Lager aufzunehmen hat. Derartige Kugelgelenklagerungen werden bei solchen Lagerkörpern häufig verwendet und sollen sicherstellen, daß nach Möglichkeit keine Kippkräfte auf das Lager wirken.

Im Inneren des Lagerkörpers ist eine Luftsammelkammer 8 in Form einer parallel zur Lagerfläche 5 verlaufenden Sacklochbohrung 6 vorgesehen, die mit einem nicht dargestellten Anschlußstopfen zum Anschluß eines Schlauches zum Heranführen der Betriebsdruckluft verschließbar ist. In vielen Fällen wird es vorteilhaft sein, beispielsweise drei sich unter 60° kreuzende, parallel zur Lagerfläche 5 verlaufende Sacklochbohrungen 6 vorzusehen, um auf diese Weise ein stark vergrößertes Volumen der Luftsammelkammer im Verhältnis zu der aus ihr ausströmenden Druckluft zu erzeugen. In den nicht dargestellten Anchlußstopfen zum Verschließen der Sacklochbohrung ist ein Filter integriert, bei dem es sich um ein handelsübliches Zigarettenfilter handeln kann. Dieses Filter dient dazu, nur von Schmutz und Staubpartikeln gereinigte Luft in die Luftsammelkammer 8 eintreten zu lassen, damit die Luftaustrittsdüsen nicht verstopft werden können.

In Figur 1 ist ersichtlich, daß in diesem Beispiel insgesamt vier Luftaustrittsöffnungen 3 in der Lagerfläche 5 gleichmäßig auf einen Kreis in der Nähe des Zentrums des Lagerkörpers angeordnet sind, wobei jede Luftaustrittsöffnung 3 in eine ihr zugeordnete vertiefte kleine Drucktasche 9 in der Lagerfläche 5 mündet (Fig. 4). Die Luftaustrittsöffnung 3 wird vorteilhafterweise durch eine Bohrung in einem Rubin (in den Figuren nicht dargestellt) ausgebildet, der in eine Bohrung 11 eingesetzt oder geklebt ist, die sich senkrecht zu der Lagerfläche 5 zwischen der Drucktasche 9 und der Luftsammelkammer 8 erstreckt.

In dem Ausführungsbeispiel gemäß Figur 1 sind insgesamt 12 kreisförmige Drucktaschen 1 gleichmäßig verteilt auf einem Kreis in der Nähe des Umfanges des ebenfalls kreisförmig ausgestalteten Lagerkörpers angeordnet. Aus Figur 3 ist ersichtlich, daß diese Drucktaschen 1 leicht gewölbt ausgeführt sind.

Von den insgesamt 12 Drucktaschen sind jeweils 3 mit einem gerade verlaufenden Luftverteilungskanal mit einer Luftaustrittsöffnung 3 bzw. der sie umgebenden kleinen Drucktasche 9 verbunden. Dies bedeutet, daß bei vier Luftaustrittsöffnungen 3 in jedem Quadranten der kreisförmigen Lagerfläche drei Drucktaschen 1 von einer Luftaustrittsöffnung versorgt werden. Es ist allerdings denkbar, daß beispielsweise jede Drucktasche 1 einer einzelnen Luftaustrittsöffnung 3 zugeordnet ist, d.h., daß es ebenso viele Öffnungen 3 wie Drucktaschen 1 gibt. Je mehr Öffnungen und Drucktaschen in dieser Art in der Lagerfläche des Lagerkörpers vorgesehen sind, desto stabiler wird die Lagerung. Allerdings steigt dabei der Fertigungsaufwand an.

Der Lagerkörper wird vorzugsweise aus Aluminium gefertigt, wobei die eigentliche Lagerfläche galvanisch gehärtet und geläppt ist, so daß sie eine Rautiefe von weniger als 1 µm besitzt.

Der Druck der diesem Luftlager zugeführten Luft beträgt in der Regel 3 bis 5,5 bar, wobei sich die Tragfähigkeit F eines einzelnen Lagers aus der Näherungsformel

$$F[kp] = 0.5 \times \text{Fläche } [cm^2] \times \text{Druck } [bar]$$

errechnet.

Weder der Lagerkörper selbst noch die Drucktaschen müssen wie im Ausführungsbeispiel dargestellt kreisförmig sein. Sie können durchaus andere Formen haben. Allerdings liegt es auf der Hand, daß eine kreisförmige Gestalt fertigungstechnisch am einfachsten herstellbar ist.

Bei der Durckluftversorgung der am Umfang angeordneten Drucktaschen durch die in der Nähe des Zentrums liegenden Luftaustrittsöffnungen oder -düsen kann jede Drucktasche über einen Luftverteilungskanal mit einer eigenen Düse oder Öffnung verbunden sein. Allerdings wird es auch hier fertigungstechnisch einfacher sein, wenn Gruppen von Drucktaschen jeweils mit einer Luftaustrittsöffnung verbunden sind, wie dies im Ausführungsbeispiel (Fig. 1) der Fall ist.

Erfindungsgemäß sollen möglichst viele, allerdings voneinander separate Drucktaschen in der Nähe des Umfanges der Lagerfläche angeordnet sein. Als Richtwert in diesem Zusammenhang kann angegeben werden, daß der Durchmesser der Drucktaschen etwa 1/10 des Durchmessers des Lagerkörpers betragen soll. Dabei ist jedoch darauf zu achten, daß die Gesamtfläche der Drucktaschen nur einen Bruchteil der Lagerfläche ausmacht, wobei als Richtwert für dieses Verhältnis wiederum 1/10 angegeben werden kann.

Der Abstand der Drucktaschenmittelpunkte vom Umfang des Lagerkörpers soll etwa gleich dem Durchmesser der Drucktaschen sein.

Beim praktischen Einsatz derartiger Luftlager in beispielsweise der Schlittenführung einer Präzisions-Werkzeugmaschine kommen eine ganze Reihe derartiger Lagerkörper gleichzeitig zur Anwendung, wobei die Durckluftzufuhr in der Regel über geeignete Schläuche erfolgt. Hierbei kann es vorkommen, daß die Druckluftzufuhr zu einem Luftlager unterbrochen wird, beispielsweise weil der Schlauch sich abgelöst oder sonstwie versagt hat. Dieser Fehler wird nicht ohne weiteres sofort bemerkt werden, was dann aber zur Folge hat, daß das Lager und - schlimmer noch - die Schlittenführung der Werkzeugmaschine erheblich in Mitleidenschaft gezogen werden kann. Um einen solchen Fehler bereits im Ansatz zu vermeiden, wird an der Luftsammelkammer ein elektronischer Druckwächter oder -sensor vorgesehen, der mit der elektronischen Steuerung der Werkzeugmaschine verbunden ist. Sobald der Druckwächter einen erheblichen Abfall oder auch nur eine wesentliche Veränderung des Druckes in der Sammelkammer feststellt, kann die Steuerung der Werkzeugmaschine entweder letztere außer Betrieb setzen oder geeignete Warnsignale auslösen, um für die Abhilfe zu sorgen. Ein derartiger Drucksensor ist in den Zeichnungen nicht dargestellt, würde aber an geeigneter Stelle in den Lagerkörper eingeschraubt werden.

Derartige Druckwächter können nach dem piezoresistiven Prinzip arbeiten: In einem Siliziumplättchen sind auf der Vorderseite definierte Widerstandsbahnen durch Ionenimplantation integriert, während die Rückseite eine Ätzung bis auf eine definierte Restdicke als Membrane aufweist. Die Widerstände sind in Brückenschaltung so angeordnet, daß die beiden Widerstände eines Brückenzweiges einer Stauchung, die beiden anderen einer Dehnung ausgesetzt sind, wenn ein angelegter Druck die Membrane zum Durchbiegen bringt.

Im dargestellten Ausführungsbeispiel beträgt der Durchmesser des Lagerkörpers etwa 75 mm und der Durchmesser des Kreises, auf dem die Drucktaschen liegen, ca. 60 mm. Der Kreis, auf dem die Luftaustrittsöffnungen liegen, hat einen Durchmesser von 10 mm. Die Drucktaschen selbst haben einen Durchmesser von etwa 7 mm und eine Tiefe von 0,3 mm am tiefsten Punkt in der Mitte. Die kleine Drucktasche 9 an der Luftaustrittsöffnung 3 hat einen Durchmesser von ca. 2 mm, während die Bohrung 11, in die der mit einem Loch versehene Rubin eingesetzt ist, einen Durchmesser von 1,0 mm hat. Die Tiefe der kleinen Drucktasche 9 beträgt 0,6 mm.

Die von den Luftaustrittsöffnungen zu den Drucktaschen hin verlaufenden Luftverteilungskanäle sind im Querschnitt etwa keilförmig mit einem Spitzenwinkel von 60° und einer größten Breite von 0,4 mm und einer Tiefe von ca. 0,25 mm.

## Patentansprüche

1. Lagerkörper für ein mit einem Fluid zu betreibenden Linearlager, etwa der Schlittenführung einer Präzisions-Werkzeugmaschine,
- mit einer ebenen Lagerfläche mit mindestens einer Fluid-Austrittsöffnung im Bereich des Zentrums der Lagerfläche,
- mit von der mindestens einen Austrittsöffnung ausgehenden, in der Lagerfläche ausgebildeten Verteilungskanälen, die das ausströmende Fluid in Richtung auf den Randbereich des kreisförmigen Lagerkörpers führen,
- mit einer Mehrzahl von in der Lagerfläche des Lagerkörpers ausgebildeten vertieften Drucktaschen, die im Randbereich des Lagerkörpers gleichmäßig verteilt angeordnet sind und über in Richtung auf den Rand des Lagerkörpers verlaufende Verteilungskanäle von der mindestens einen Austrittsöffnung mit Fluid versorgt werden,
- wobei die Drucktaschen, Verteilungskanäle une Austrittsöffnungen zusammen nur einen Bruchteil (ca. 1/10) der ansonsten ebenen Lagerfläche einnehmen,
  dadurch gekennzeichnet,
- daß mehrere Luftaustrittsöffnungen gleichmäßig verteilt im Bereich des Zentrums der Lagerfläche angeordnet sind,
- daß mehrere benachbarte, kreisförmig ausgebildete Drucktaschen mittels zugehöriger Luftverteilungskanäle mit einer gemeinsamen Luftaustrittsöffnung verbunden sind,
- daß jede der Luftaustrittsöffnungen die in dem zugehörigen Sektor der Lagerfläche angeordneten Drucktaschen mit Druckluft versorgt,
- und daß eine Luftsammelkammer im Lagerkörper vorgesehen ist, deren Volumen im Verhältnis zu der aus den mit einer Drosselstelle versehenen Austrittsöffnungen ausströmenden Luftmenge möglichts groß ist.

2. Lagerkörper nach Anspruch 1, dadurch gekennzeichnet, daß der Durchmesser der Drucktaschen etwa 1/10 des Durchmessers des Lagerkörpers beträgt.

3. Lagerkörper nach Anspruch 2, <u>dadurch gekennzeichnet</u>, daß der Abstand der Drucktaschenmittelpunkte vom Umfang des Lagerkörpers etwa gleich dem Durchmesser der Drucktaschen ist.

4. Lagerkörper nach einem der voranstehenden Ansprüche, <u>dadurch gekennzeichnet</u>, daß die Lagerfläche des aus Aluminium hergestellten Lagerkörpers geläppt und galvanisch gehärtet ist und eine Rauhtiefe unter 1 μm aufweist.

5. Lagerkörper nach einem der voranstehende Ansprüche, <u>dadurch gekennzeichnet</u>, daß ein Drucksensor an die Luftsammelkammer angeschlossen ist.

## Claims

1. A bearing body for a linear bearing which is to be operated by a fluid, say, the carriage guide of a precision machine tool:
- having a plane bearing area with at least one fluid outlet opening in the region of the centre of the bearing area;
- having, starting from the at least one outlet opening and formed in the bearing area, distributor channels which lead the emerging fluid in the direction of the edge region of the circular bearing body;
- having a plurality of pressure pockets formed sunk in the bearing area of the bearing body, which are arranged uniformly distributed in the edge region of the bearing body and are supplied with fluid from the at least one outlet opening via distributor channels running in the direction of the edge of the bearing body;
- the pressure pockets, distributor channels and outlet openings together occupying only a fraction (about 1/10) of the otherwise plane bearing area;
<u>characterized in that</u>
- a number of air outlet openings are arranged uniformly distributed in the region of the centre of the bearing area;
- a number of adjacent pressure pockets, made of circular shape, are connected by means of associated air-distributor channels to one common air outlet opening;
- each of the air outlet openings supplies with compressed air the pressure pockets arranged in the associated sector of the bearing area;
- and an air collector chamber is provided in the bearing body, the volume of which is as large as possible in relation to the amount of air flowing out of the outlet openings which are provided with a constriction.

2. A bearing body as in claim 1, <u>characterized in that</u> the diameter of the pressure pockets amounts to about 1/10 of the diameter of the bearing body.

3. A bearing body as in claim 2, <u>characterized in that</u> the distance of the centres of the pressure pockets from the circumference of the bearing body is about equal to the diameter of the pressure pockets.

4. A bearing body as in one of the preceding claims, <u>characterized in</u> that the bearing area of the bearing body produced from aluminium is lapped and hardened galvanically and exhibits a peak-to-valley height of under 1 μm.

5. A bearing body as in one of the preceding claims, <u>characterized in</u> that a pressure sensor is connected to the air collector chamber.

## Revendications

1. Elément d'appui pour palier à déplacement linéaire actionné au moyen d'un fluide, par exemple la glissière de chariot d'une machine-outil de précision,
- ayant une surface d'appui plane munie d'au moins un orifice de sortie de fluide dans la zone du centre de la surface d'appui,
- ayant des canaux de distribution pratiqués dans la surface d'appui, partant d'au moins un orifice de sortie, qui amènent le fluide sortant en direction de la zone périphérique de l'élément d'appui circulaire,
- ayant plusieurs chambres de compression obtenues par évidement de la surface d'appui, qui sont réparties uniformément dans la zone périphérique de l'élément d'appui et qui sont alimentées en fluide par les canaux de distribution orientés vers la périphérie de l'élément d'appui à partir d'au moins un orifice de sortie,
- les chambres de compression, les canaux de distribution et les orifices de sorties n'occupant ensemble qu'une fraction (env. 1/10) de la surface d'appui qui est plane partout ailleurs,
<u>caractérisé en ce que:</u>
- plusieurs orifices d'échappement d'air sont répartis uniformément dans la zone du centre de la surface d'appui,
- plusieurs chambres de compression circulaires voisines sont reliées à un orifice d'échappement d'air commun par des canaux de répartition d'air afférents,
- chacun des orifices de sortie d'air alimente en air comprime les chambres de compression qui sont disposées dans le secteur afférent à la surface d'appui,
- et qu'une chambre de collecte d'air est prévue dans l'élément d'appui, chambre dont le volume est en rapport avec la quantité la plus grande d'air qui peut s'échapper par les orifices de sortie pourvus d'un point d'étranglement.

2. Elément d'appui selon la revendication 1, <u>caractérisé en ce que</u> le diamètre des chambres de compression est égal à environ 1/10 du diamètre de l'élément d'appui.

3. Elément d'appui selon la revendication 2, <u>caractérisé en ce que</u> la distance entre le centre de la chambre de compression de la circonférence de l'élément d'appui est approximativement égale au diamètre des chambres de compression.

4. Elément d'appui selon l'une des revendications précédentes, caractérisé en ce que la surface d'appui de l'élément d'appui en aluminium est rôdée et durcie par électrolyse et présente une profondeur de rugosité inférieure à 1 µm.

5. Elément d'appui selon l'une des revendications précédentes caractérisé en ce qu'un capteur de pression est relié à la chambre de collecte d'air.

Fig.3

Fig.4

Fig.1

Fig.5

Fig.2